# EUROPEAN PATENT SPECIFICATION

(11) **EP 3 277 093 B1**
(45) Date of publication and mention of the grant of the patent: **08.05.2019**
(21) Application number: 16712871.9
(22) Date of filing: 30.03.2016
(51) Int. Cl.: A22C 13/00, A22C 11/12, B29L 31/00

(54) **END CLOSURE FOR AN EDIBLE COLLAGEN CASING AND A METHOD FOR OBTAINING THEREOF**
ENDVERSCHLUSS FÜR EINE ESSBARE KOLLAGENHÜLLE UND VERFAHREN ZUR HERSTELLUNG DAVON
FERMETURE D'EXTRÉMITÉ POUR UN BOYAU DE COLLAGÈNE COMESTIBLE ET PROCÉDÉ D'OBTENTION CORRESPONDANT

(30) Priority: 30.03.2015 CN 201510144302
(43) Date of publication of application: 07.02.2018
(73) Proprietor: Viscofan Technology (Suzhou) Co., Ltd., Suzhou, Jiangsu 215000 (CN)
(72) Inventor: GARCÍA, Ion Iñaki, Suzhou Jiangsu 215000 (CN); ETAYO GARRALDA, Vicente, Suzhou Jiangsu 215000 (CN); NEGRÍ, Juan, Suzhou Jiangsu 215000 (CN)
(74) Representative: Herrero & Asociados, S.L.
(86) International application number: PCT/EP2016/056896
(87) International publication number: WO 2016/156379

(56) References cited:
- US-A- 2 670 294
- US-A1- 2006 075 722

## Description

### TECHNICAL FIELD OF THE INVENTION

The present invention has application in the meat-casings industry, and particularly in the field of the closures intended for shirred casings which could be done in an easier way and without wasting too much casing material, which was able to ensure the withstand to the zippy impact of the meat emulsion upon stuffing, that was not invasive of the internal medium of the casing tube and was able to impart a so acceptable finished aspect that could allow the recovery of the first filled sausage of each batch along with the rest of produced sausages and, at same time and particularly in the edible collagen casings market, which was compatible, in the sense of edibility, with the nature of material with which the casing is made. It should be also a closure whose manufacture was easy to automatize, in such a way that even it could be performed on-line in the same machine where the casings are shirred. This is the reason why the material also requires a low melting temperature in order to prevent any damage to the casing, as well as a high cohesiveness for a rapid welding in order to get a high efficiency of application.

### BACKGROUND OF THE INVENTION

The prior closing of one extreme of a food casing is an essential step for the sake of a successful filling in a further stuffing process. Diverse end-closure solutions have been brought to term in the food casing industry to finish the manufacturing of almost all food casings that are practically ready-to-stuff. This finishing stage encompass a broad context of handling operations, generically called "converting", wherein the casings in a flattened form, are unwound from their native coils and thereafter are either shirred or alternatively segmented, coated, tied with cord hanger loops, encased in elastic tightening nets or, sewing a seam for so creating a longitudinal bordure or final seal etc, to finally being closed at one extreme.

For the sake of clarity we define:
Casing is a smooth and flexible hollow tube of a natural or synthetic film, with initial and final extremes.
Length of casing is a portion of casing, i.e. a stretch of casing.
String of casing is a length, portion or stretch of twisted casing.
Terminal corresponds to the final extreme of a casing.
Strand is a stick or shirred and compacted casing forming a round hollow tube.
Bore is the inner cavity of a hollow tube such as a strand or stick.

Different converting operations are applied depending on the type and destination of the casings, but most of them are finished with the sealing of the extreme of casing which will form part of the first formed sausage and which is going to receive the first impulse of meat emulsion that enters at certain speed through the filling horn of a stuffing engine. The sealing must therefore withstand the kinetic energy transmitted by the entering mass without opening or breaking.

Most of closing solutions are intended to create a seal with the casing material itself, without introducing other alien elements thereto. Those closing processes can seem like an easy task; but the machinery to carry them out is in fact highly complex. The fact is that what for the human hand is an easy operation, when it is intended transferred to a machine can become a challenge from the point of view of engineering and construction.

End closures made up by the casing material itself normally use a deshirred length of casing from the extreme of a strand of shirred casing, which is somehow clamped and thereafter mechanically twisted around its own axis to form a string which either is tied into a knot (manual or automatically) and/or alternatively compressed into a tangle of matted casing and thereupon positioned back inside the bore of the casing stick by means a well centred push rod. Relating to this prior art and in that what concerns to a knot at the final extreme of a shirred casing as an end closure and methods of making the same, it is worth to mention, by way of reference, the document No. EP-0294180-A1, wherein the description of a machine to make a simple knot reflects the complexity of the engine and gives an idea about the cost of this development as well as the increase in cost operation to translate converted shirred strands to this, now off-line, operation which also requires a number of this kind of machines, additional manpower, much working area, specialized personnel, maintenance of machinery and, of course, is submitted to the risk of occasional engine breakdown, with consequent shutting down of operation and fall of efficiency. By the positive side the knot has the advantage of having a pleasant aspect what enables it to be accepted as a part of the first filled sausage, contrary to what happens with the other methods.

Another kind of closing operation include the use of certain elements which are alien to the nature of the casing material, those which perform the fastening by means of the tightening of a terminal tranche of casing which has been previously collapsed by compressing and/or twisting of said terminal portion. Some of these elements can be for instance fibrous cords made up of natural or plastic fibres, plastic zip-ties and metallic or plastic clips.

The use of a metallic clip for the closure of one or both extremes of an encased sausage, during the stuffing process, is well known (see document No. GB-719317-A). This system is based in the tightening force exerted by a ring-like open wire that is strongly closed helically to clamp and so strangle a stretch of casing. The toughness of the wire prevents its own opening, and the closure remains strongly fastened. On the other side, the use of metallic clips, rivets or wires, in converting casings is extended just to those casings that are not intended for being shirred but rather to those which are going to be used in special modalities of stuffed meats. The subject of this kind of closing elements are those food casings with a stronger film structure than that of edible collagen, and that do not get damaged upon receiving the clip with a wire ring, as for instance those of reinforced cellulose, non edible collagen and/ or plastic, and generally of larger calibres, than those intended for sausages as Wiener, Bratwurst, etc. of edible collagen. One example can be found in the document No. GB-1062010-A where a closure is performed by forming a plurality of longitudinally extending pleats, compressing the pleated portion, forming a hole (an eyelet) in said pleated portion and inserting and forming rivet means and positioning a casing hanger adjacent to said hole, as well as in documents No. GB-1180067-A and DE-10305580-A1, relative to metallic clips, amongst others.

Given the general protocols normally conducted for the quality control of those converting processes of shirred casings, either of cellulose, collagen or plastic, wherein the packed boxes of finished strands or sticks of shirred casings are submitted, amongst others, to exhaustive control through metal detectors, then one would face at a serious drawback if every stick carried a metallic clip or wire incorporated thereto. This kind of metallic closures can also deteriorate inside the boxes, owing to the moisture contained therein, with the consequent spoilage of casing sticks.

Plastic clips have been proposed as a fastening element by some authors, what could overcome this clear drawback (see for instance document No. WO-9505320-A1). In this particular case, plastic clips are made up by two linked elements by means of a film hinge, which can be inserted locking the one inside the other at the opposite extreme to the hinge, and so firmly clamping in the middle one twisted final portion of a shirred casing. This clip or fastening element performs in a similar way of a zip-tie, in the sense that one part has an arm-like coupling section with triangular teeth that slope in one direction, and the other one has a slot with a flexible pawl that rides up the slope of these teeth when the arm is inserted. The pawl engages the backside of these teeth to stop removal of the arm, in such a way that once closed the clip remains locked. However the size, hardness and irregular shape of this element may be conflictive at the time of being expelled outwardly from the bore by the pressure of the meat filling, since it might rub against the inner folds of the casing and make breakings thereto, and likewise it might be thrown out in a not well focused direction and trip over the brake ring of the stuffing horn with the consequently breaking of the casing, spilling of meat paste and bringing about the spoilage of the batch in run.

The ability of this kind of fastening element to adhere, in the melting state, to the casing surfaces could be therefore another important advantage for the correct functioning in some embodiments of this closure to prevent the occasional sliding of the tightening element over the embraced surface, that would lead to the closure opening just when the casing receives the pushing of meat emulsion upon stuffing.

In any case the presence of an strange element in a sausage it is not well seen by the customers and sanitary authorities because of the risk of this objects to be swallowed, or transferring of undesirable or hazardous chemical molecules or substances to the sausage as for instance plasticizers. This is why it would be also interesting that the plastic from which the fastening element is made was at same time water soluble, in order to disappear, for example, before the sausage comes to market.

Unfortunately, there does not exist available synthetic materials which are plastics and at same time can meet the requirement of being edible, water soluble or adhering onto a hydrated surface when the plastic is in the melting state. The collagen matrix of collagen casings is in hydrated state at the moment of shirring operation, and their moisture content can range from 12% until 30%, once that they are subjected to a moisture stabilization, although the average ranges lie between 17% and 24%, since with moisture contents below 17% the collagen films tend to be more brittle and break upon making a knot therewith, and by other side a moisture level higher than 24% can unstabilize the film structure.

We have already discussed the drawbacks of synthetic thermoplastics. If we look for natural thermoplastic polymers, we can find that there are some resinous compositions of polymeric substances derived from natural polymers, mainly proteins and polysaccharides or mixtures thereof, capable of being molded by thermoplastic procedures. However we find several difficulties or disabilities to apply these materials in our casing closure; wherein thermoplastics are protein based, then either they need also high melting temperatures and high stresses to be worked (thermoplastic extruders) or they are not able to adhere onto hydrated surfaces (sometimes because of their high content of water). In the case of using collagen or other proteins, such as those of plant origin (soy, gluten etc.) in compositions where other plasticizers are used in place of water (e.g. glycerol), although the result may have outstanding mechanical properties, what is obtained is a thermosetting behavior of the composition (cf. US-8153176), which therefore cannot be used as a hot-melt plastic. Some other examples that claim food-grade hot-melts can be found for instance in document No. US-6846502-B1 (edible hot melt composition) based on polysaccharides and a plasticizer and a strengthening agent; as well as in document No. JP-57158276 that discloses a hot-melt adhesive composition of ethylene vinyl acetate edible, tackifying resin and paraffin wax. All those are not effective as adhesives onto hydrated surfaces.

Amongst other examples of available resinous compositions are those used to manufacture shell capsules intended for encapsulation of pharmaceutical agents. These capsules, containing dry or liquid pharmacological compositions, are once swallowed, dissolved in digestive tract and then releasing active agents.

Proteic compositions from which those capsules are manufactured, are mainly based on either denatured collagen or hydrolyzed derivatives thereof, such as the gelatine.

Gelatine is a proteic product obtained from either acidic or alkaline hydrolysis of collagen, which has lost its original native triple helix structure giving rise to a randomly distribution of shorter segments of polypeptide backbone also called amino-acid alpha chain, and that has an averaged molecular weight of less than 500 KDalton. Thus, gelatine does not form real solutions; instead colloidal solutions or sols are formed. On cooling this sols convert to gels, and on warming they revert to sols. Upon gelling, gelatine molecules form solid three-dimensional structures. The water is retained between said molecules, those which below a certain temperature are linked to each other by various physical bonds, mainly hydrogen bonds creating the three-dimensional polymeric network. However this water can be mobilized and for instance, can evaporate. The unlimited reversibility of the gelling process is by far the most important technological property of gelatine. The analytical measure of gelling power is called the Bloom value. Gelatine of high Bloom has characteristically higher melting and gelling points and shorter gelling times in the final product. The Bloom values of commercial gelatine types are within the range 50-300 Bloom. The range 50 to 100 g is designated as low-Bloom, that of 100 to 200 g as medium-Bloom and that of 200 to 300 g as high-Bloom.

The molecular weight distribution of gelatine is determined by the type and intensity of hydrolysis procedure used. In the case of alkaline-conditioned high-Bloom gelatine (called Type B) the major part of the molecular weight fractions is in the region of 100000 g/mol, corresponding to the alpha-chain whereas the Acid-conditioned gelatine has rather a wider distribution. Molecular fractions in the region of 100000 g/mol have a higher influence on the gel strength, whereas the viscosity is primarily a function of those in the molecular weight range of 200000 to over 400000 g/mol.

By way of example it is worth to mention the compositions disclosed in patent documents No. US-4576284-A (-284A) and US-4591475-A (-475A), wherein said compositions are based on low-grade gelatine. In 284A it is disclosed a gelatinous material based on gelatine type B of 150 Bloom with a water content of 5% to 30% (which acts as a plasticizer). It is mentioned that if a softer product is desired, then some edible plasticizers are incorporated to the composition during the process, such as glycerol, sorbitol, propylene glycol etc. in an amount which ranges between 0.5% and 40% on a weight basis related to polymer weight. In document (-475A) along with the plasticizer alternative it is disclosed the addition of lubricants, colouring agents and other polymeric substances for gelatine extension (called extenders), such as other proteins or polysaccharide gums. Included are also some cross-linkers. Document No. US-4655840 relates to compositions for injection moulding, which are generally hydrophilic, although preferably made of gelatine of different Grade, which can be modified with the addition of other natural hydrophilic polymers mainly from vegetable origin.

Unfortunately, resins based on aqueous gel systems of gelatine for instance, are lacking enough adherence on hydrated surfaces like collagen and also enough cohesiveness in the melt state so as to perform correctly in a rapid and efficient operation like that described in the instant invention. No descriptions are made on the mechanical properties of such resinous materials, neither on their performance as adhesives both in solid as well as in the melt state.

Polysaccharide compositions, likewise used for capsules, are based on thermoplastic derivatives of cellulose and starch, as the main sources, but also from other natural polysaccharides and their synthetic derivatives. Both kind of polymers are generally hydrophilic. Thermoplastic compositions, totally based on polysaccharides such as HPMC or HPC and also intended for injection molding of capsules are described for example in US-4738817 and MX-2010013731-A respectively.

On the other side, the modulus of elasticity of protein thermoplastics used to manufacture of pet toys, when stated, stays away largely from the needs of the instant invention because of its excessive stiffness, as for instance the case of document No. US-6379725, where a mixture of proteins from vegetable and animal origin, along with a plasticizer and additives is extruded to give a plastic mass which once cooled has a modulus of between 900 and 4000 MPa and tensile strength between 20 and 40 MPa. It must be stressed also that this compositions are not water soluble. Another proteic thermoplastic composition based on collagen and water, those which can be used to manufacture articles for animal consumption, are set forth in international application No. WO-2007104322-A1, although in this case the polymer is a partially denatured collagen having a solubility of at least 25% in water at 60°C and the extruded product display an elongation of 200% and a tensile strength of about 20 MPa.

The most serious drawback of all the described compositions of natural polymers is that it is difficult to find a sole resin capable to accomplish with the compromise of the needed physical properties, either mechanical, thermal, adhesive and even with rheological properties as to correctly perform both at the moment of the closure application and afterwards, as an efficient tightening element of closing, and being, at same time, edible and water soluble. Normally resins based on natural polymers have got elevated temperatures of fusion, rare or no adhesive capacity on wet surfaces such as a collagen film with a water content of more than 15%, (that is the case of an edible and shirred collagen casing) neither have the sufficient cohesiveness as to establish a rapid welding with itself.

By reference to the sticky property, we mention here the international application No. WO-2009045824-A2. Further to this document some mixtures comprising gelatine and glycerol or fructose, upon being wetted under the solid state, reach a certain degree of stickiness. This has been proposed for example for the manufacture of a surgical bolster material to act in conjunction with a surgical stapler, where it is indicated that the ratio by dry weight of polypeptide material used, for example gelatine with respect to a polyhydroxy material, for example glycerol, is in the range of 30:70 to 70:30. When the material, in the solid state, is wetted, becomes for instance adhesive on an ECM (extra-collagenic matrix material). However, this property has no practical effect usable in the closure of the invention, because the collagen casing whatever the intrinsic content of water that has (at least within the range of hydration that is focused in the present invention), does not have a wetting effect on the current closing element so that in the solid state the material of the present invention is not sticky.

US patent application No. US-2006/075722-A1 discloses a method and system for applying a non-metallic clip to a target package in an automated or semi-automated manner that include: (a) directing a plurality of non-metallic clips, each respective clip having a unitary body with a crown and spaced apart first and second legs, to travel in a clip travel path having a forward direction that merges into a punch path; (b) punching a non-metallic clip in the punch path so that the first and second legs thereof span opposing sides of a trailing and/or leading edge portion of a target package; then (c) deforming the clip so that the leading edge portions of the legs reside proximate each other about the trailing and/or leading edge portion of the target package to thereby close the clip about the target package.

### DESCRIPTION OF THE INVENTION

A first aspect of the invention relates to a closure that satisfies all the requirements exposed above, as will become evident from the following description of its main features along with the examples shown below. Such a closure is done by using a non-invasive tightening element, based on a thermoplastic and edible material, which fastens and/or adheres on to a very short portion of casing which had been previously collapsed by a shutter-like device and/or thereupon twisted, wherein said element is desirably of the same nature than the casing material itself and even can be edible as well as dissolvable in warm water, in order to be considered as safe upon being swallowed or even disappear after processing or cooking the sausage.

Relating to the shape and size of this element, this should preferably be so small as to being introduced, once it forms part of the closure, and to fit inside the bore of the stick of shirred casing in a well centred position by exerting a mild force; the element should also have a radial cross-sectional symmetry in order to facilitate its expulsion, upon receiving the first impulse of meat, out of the bore without the risk of brushing against the inner folds of the stick and also avoiding to bumping the brake ring of the stuffing machine.

Such an element should have also some features that efficiently facilitate its application on the stretch of twisted casing, in such a sequence of steps that could be translated to an automatized system, as simplest as possible. Amongst these features are some suitable physical and mechanical properties such as low melting temperature, an elevated cohesiveness in the fluid state, and a rapid welding ability.

The performance of the fastening element of the invention's closure can take place by means of two complementary forms of action:
a) by merely tightening the section of collapsed casing, that requires particular physical properties of flexibility and toughness (elevated modulus), wherein the system is based in the tightening force exerted by a ring-like element that is closed and welded to clamp, and so strongly strangle a stretch of casing and so avoiding, owing to the pressure, the slipping of the ring.
b) by adhesion to the surface of that section, and thus avoiding a possible slipping of the ring element.

The ability of this kind of fastening element to adhere, in the melting state, to the casing surfaces is therefore another important advantage for the correct functioning in some embodiments of this closure because the occasional sliding of the tightening element over the embraced surface would lead to the closure opening just when the casing receives the pushing of meat emulsion upon stuffing. However it must be stressed that both adhesiveness and tightening capacity have a complementary effect in the closure of the invention although their individual importance varies according with the kind of casing and its calibre. It may occur the case that a small calibre can stay firmly closed by the tightening of a ring-like element of the invention whose level of adhesiveness on a hydrated surface is weak but its modulus is high enough as to exert a strong tightening pressure on to the embraced strand of twisted casing and so avoiding a further sliding.

We have surprisingly found that a closure element which can meet all the requirements mentioned above can be a ring-like tightening element which performs as thermoplastic and is essentially made of dry gelatine and anhydrous glycerol, as long as the fraction of water in the total weight of composition does not exceed a 15%. This thermoplastic material has the property of being welded at low temperature and having mechanical properties which lies between the viscoelastic and plastic behaviours that make it able to exert a tightening effect enough as to resist the sausage filling process and at same time is edible and water soluble.

The viscoelastic behaviour and glass transitions of gelatine incorporating the diluent glycerol in both, the anhydrous and slightly hydrated state was studied, through the entire concentration range, by Yannas and Tobolsky (Yannas IV, Tobolsky AV. Stress relaxation of anhydrous gelatin rubbers. J Appl Polymer Sci 1968; 12(1): 1-8), although there are no reported data on any systematic study regarding the properties of adhesiveness, in the melting state, of such compositions.

Surprisingly the mixture of dry gelatin and anhydrous glycerol, results in a thermoplastic solid which acts as a hot-melt, characterized by a very low Tg (glass transition temperature) and a relatively low Tm (melting temperature) which is very acceptable for the required working conditions of the closure of the invention, and wherein the transition from the solid phase to liquid phase delimits the transition between the adherent and non-adherent state, and wherein the fluid phase has a high cohesiveness and viscosity and wherein owing to the low Tm, the transition to the solid phase is performed with great speed, which allows that a welding of said material to take place fast enough. However the solid resin has no tack at ambient temperature.

That particular thermoplastic composition is made up of a dry commercial gelatine that is directly dissolved in an anhydrous glycerol, under heating conditions of between 90°C and 120 °C, and can perform as a thermoplastic and also edible material with the required thermal, mechanical and adhesive properties, provided that the ratio w/w of respective components lies preferably between 2:1 and 1:3 and the total water content does not exceed a 15% of the total weight of the composition. This material is also water soluble but can be insolubilized, if desired, by reacting it with a crosslinking agent.

Further to the required and desired mechanical properties summarized in the Young's modulus, can be modulated by means of the variation of gelatine and glycerol proportions in the composition; in such a way it is possible to obtain a large range of plastic behaviours from less to more flexible or tougher, within a narrow variation of both the melting temperature (Tm) and cohesiveness, what makes it very advantageous from the point of view of closing process efficiency.

Mechanical properties: They are highly dependent on the molecular weight of polymer and the ratio polymer/glycerol.

The mechanical properties of this ring-like element are very important since not only it must be flexible enough, during its closing operation, as for allowing to be closed without breaking, but also it must have the suitable elasticity (Young's modulus) as to withstand the expansion promoted by the stress of the air or the meat from inside the casing, during the stuffing operation, and maintain firmly the tightening of the embraced casing stretch. If the ring yields to the expansive stress, like an elastic rubber, then the meat dough could open itself the pathway through the closure and spill out. The higher the modulus the lesser elastic is the material and, conversely, the lower the modulus the more elastic.

The solid resin has a plastic-like behaviour whose properties vary in function of the polymer molecular weight, the Bloom value and the proportion of this polymer in the resin composition. The bigger the molecular weight and Bloom value (>150 Bloom) the highest the viscosity and therefore the cohesiveness.

We have found out that the ring material must have conveniently a modulus of at least 0.5 MPa and preferably not bigger than 50 MPa to have a correct performance and to prevent all those mentioned drawbacks. In this sense the best results are obtained in combination with a gelatine of high Bloom, conveniently higher than 150 Bloom, and preferably higher than 200 Bloom due to the optimal cohesiveness that this grade of polymer provides to the thermoplastic composition at room temperature conditions of Temperature.

The melting point:
The melting point of the ring's material as well as the quickness with which this material can create a weld with itself is also of crucial importance for the efficient execution of the heat-sealed closure once the process is translated to a machine; a low melting point is also desirable to not affect the integrity of the casing upon contact with the fused material. The lower the temperatures involved in the process, the safer the system used and also easier.

The melting temperature of slightly hydrated gelatine has been established by Yannas and Tobolsky in 175°C ±10°C. It is well known that binary compositions as for instance that of gelatine and glycerol, in which the solid component is dissolved in the other component, suffer a lowering of the solidification point in such a way that with increasing the concentration of that component with lower solidification temperature, will decrease the solidification temperature of the mixture.

The melting temperature of this resin composition varies with the polymer proportion (gelatine/glycerol ratio) and is higher at the extent that the polymer proportion increases. However a compromise should be reached between the plastic properties, the melting temperature, the adhesivity of the resin at this melt state and an elevated cohesiveness correspondingly linked to a quick setting time of a welding of this material. As this ratio increases, also increases the stickiness of the material in the melt state, but its ability to adhere to the moist surface of a collagen film definitely increases the lower the total water content of the composition.

We found out that an optimum temperature range for carrying out the process of ring closure is between 40 ° C and 90 ° C since such temperatures do not affect the integrity of the collagen casing. We found out that a ratio of polymer/polyol around 1;1 and as closer to 1:2 or even higher, allows the formation of a quick welding, because within this range of proportions, a wide variation of mechanical properties is obtained without large increases in the melting temperature, while the cohesiveness of the melt is high, allowing a quick formation of weld from the moment of contact between the two surfaces, what occurs just for a slight drop in the temperature. Relating to this point we have also found that the gelatine must be preferably of an elevated degree of polymerization what implies that there must have an elevated Bloom, and particularly above 150 Bloom and more preferably from about 200 Bloom to about 300 Bloom.

### Cohesiveness:

The quicker the setting of the weld, the faster the closing step and the more efficient the closing system.

As used herein the term "cohesiveness" refers to the resistance offered by one fluid material to separate from itself and, in the case of polymeric dispersions of amorphous polymers, is directly dependent on the molecular size of the polymer molecules and on the temporary bonds, mainly hydrogen bonds, between such molecules in the polymer matrix. The larger the molecules dispersed in the matrix, the higher the number of bonds inter-molecules and bigger the resistance to separation.

### Water solubility of the locking ring:

Another important factor in the base resin of the locking ring of the closure of the invention is their water solubility, since the sausage product in an edible collagen casing with closure of the present invention may undergo a cooking process before packaging. During normal processing cycle the temperature rises above 70 ° C and may be appropriate that the ring to disappear during the cycle, or to remain in it, for example if they are to be used as some kind of indicator. Thus in Table 1 are also reflected the solubility of the resinous material of each composition under normal processing conditions:

The presser ring is soluble in hot water and can be completely solubilized in water at 81.5°C over a period of 35 minutes. If desired that the ring remain longer, it is possible to replace gelatin by a partially denatured collagen as used in the international application No. WO-207104322-A1, or it is possible to use some kind of crosslinking agent capable of insolubilizing the polymer by creating covalent type bonds, as is well known in the art. Such crosslinking agents are preferably those food grade in very precise amounts as aldehydes.

### Parameter measuring:

### Tensile properties of plastics:

Tensile tests were performed in a universal tensile machine code ZWICK MO 02/17 (at least Class 1 according to ISO 7500-1 and ISO 9513) equipped with an extensometer Contact MO 0217-2 code (at less class 1 according to ISO 9513) and self-tightening clamps a test speed of 50 mm / min according to ISO 527-2: 2012 / 5A / 50. We used a grip distance of 50 mm. 5A type specimens were obtained by punching. Prior to testing, the specimens were conditioned for 16 hours at 23 ± 2 ° C and 50 ± 10% RH conditions in the test chamber were 23 ± 2 ° C and 50 ± 10% RH.

### Melt flow index:

Used to measure the viscosity of molten thermoplastic; this parameter was chosen to evaluate the variation of the cohesiveness of the thermoplastic composition according to the temperature. The tests were performed with a flow rate meter of MO02 / 16 code as shown in the UNE EN ISO 1133-1: 2012. We used a nozzle 0.025 ± 8.000 mm length and diameter of 2.095 ± 0.005 mm. The distance traveled by the piston was 30 mm. Pre-melting time was 5 min. The test conditions were: a) temperature 120, 100 and 80; b) loading 1.2, 5.0 and 21.6 for sample 1: 2. No cutting time applies.

### Determination of thermal transitions by differential scanning calorimetry (DSC):

The determinations were performed on a Perkin-Elmer Pyris Diamond MO01 / 21 code calorimeter according to ISO 11357: 1997, using representative samples of between 5 and 10 mg in aluminum crucibles and under nitrogen flow. For calibration patterns have been used Indium and Zinc. The result is the average of two determinations. The values determined are for the second scan. The test parameters were: a) Initial temperature = -60 ° C; b) Final temperature = 150 ° C; c) heating rate = 20 / min; d) cooling rate = 20 / min.

### Adhesiveness:

The adhesiveness was tested on sheets of flat casing equilibrated in climatic chamber with 85% RH until the casings acquired a moisture content of 12%, 21% and 35%. Various resins were melted in a steel plate and casting them on the casing sheets extending preformed conditioned molten film thereon each about 3 cm wide and 10 cm long. They were allowed to cool for 5 minutes and then measured with a dynamometer at 90 ° C to test the peel strength.

### The tack at room temperature was Judged by the adhesive's stickiness to human fingers

### Residual moisture:

In preparing the compositions the apparent moisture content is determined after drying the gelatin powder in an oven at atmospheric pressure at 105 ° C for 24 hours is tested. The resulting data provide a basis for calculating the residual water content in the binary compositions from commercial gelatin and glycerol. However when it comes to the change (reduction) in the composition of said residual content, the drying process is performed in an oven at 10⁻³mm pressure Hg vacuum at temperatures of 25 ° C to 105 ° C. The calculation is performed by taking the weight of the subject to testing specimens.

### DESCRIPTION OF THE DRAWINGS

To complement the description that is being made and for the purpose of aiding to better understand the features of the invention according to a preferred practical embodiment thereof, a set of drawings is attached as an integral part of said description in which the following is depicted with an illustrative and non-limiting character:
Figure 1 shows several hollow worm-shaped rods with a longitudinal V-shaped opening, molded by injection molding.

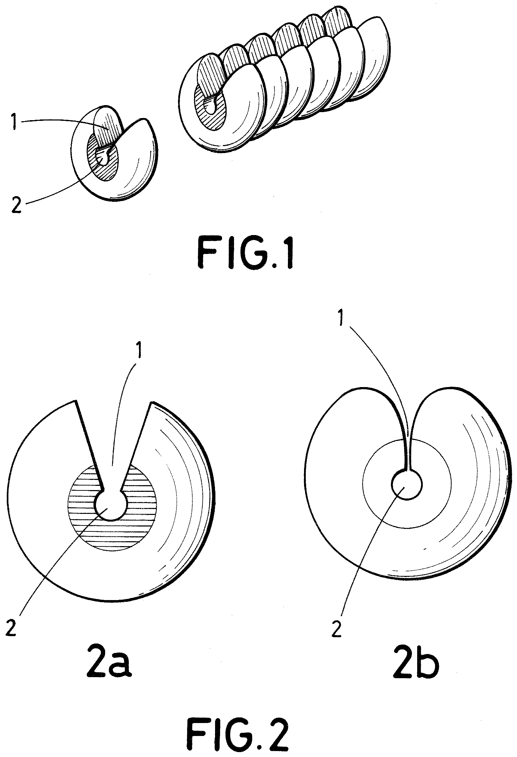

Figure 2 shows how the worm has been molded with a longitudinal groove whose section is V-shaped, that reaches the axial hole, so that any segment transversely cut from the worm has a ring shape open at "c". The view 2a shows a tightening element that is a solid ring-like element, made of an edible and water soluble thermoplastic composition, which has a smoothly curved v-shaped entry gap which leads to the central hollow, whereas the view 2b shows another embodiment wherein the ring-like element is made up of a proportion of gelatine/glycerol which allow the ring to exert a strong tightening effect onto the twisted portion of casing, while the same composition material has a sufficiently elastic behaviour as to allow the ring to be opened, without breaking, during the short fraction of time that lasts the fitting of the twisted string of casing.

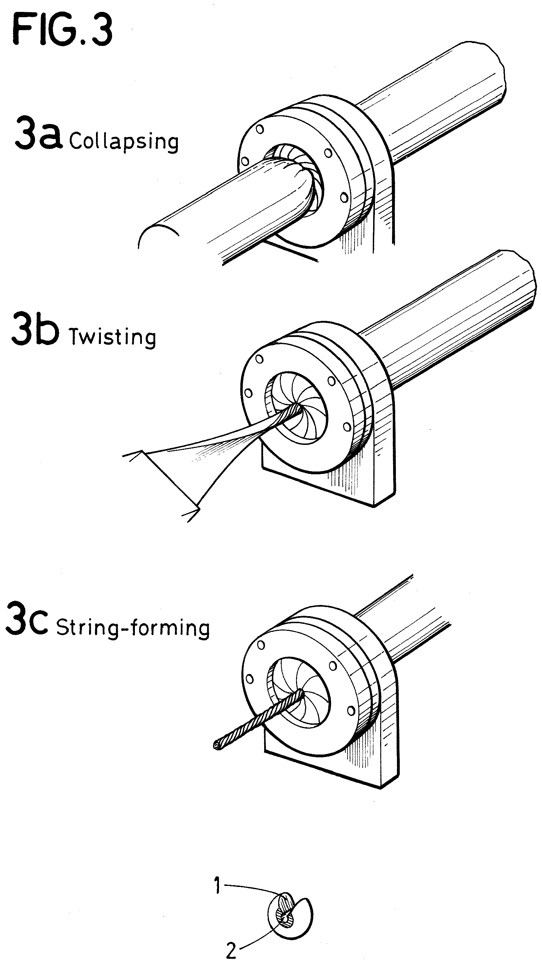

Figure 3 shows three views where: View 3a shows one end of the shirred casing strand that is caught by a forceps located at the end of a rod whose axis coincides with the axis of the strand. The rod retracts and pulls it for unshirring a length of not more than 5 cm of casing. Immediately a shutter (a motorized iris diaphragm) closes its blades and collapses the unshirred casing, as shown in view 3b, in a point between its connection with pleated part (about 10 mm of it) and the point of gripping the forceps. Further, upon the closing of the shutter, the forceps rod rotates on its axis and twists the rest of the section of casing creating a string (string) in the direction of the axis of the strand of shirred casing, as shown in view 3c, of about 3 cm long.
Figure 4 shows the open ring of thermoplastic material being closed by means of mobile clamps to create the annular form.
Figure 5 shows a detailed view of figure 3a.

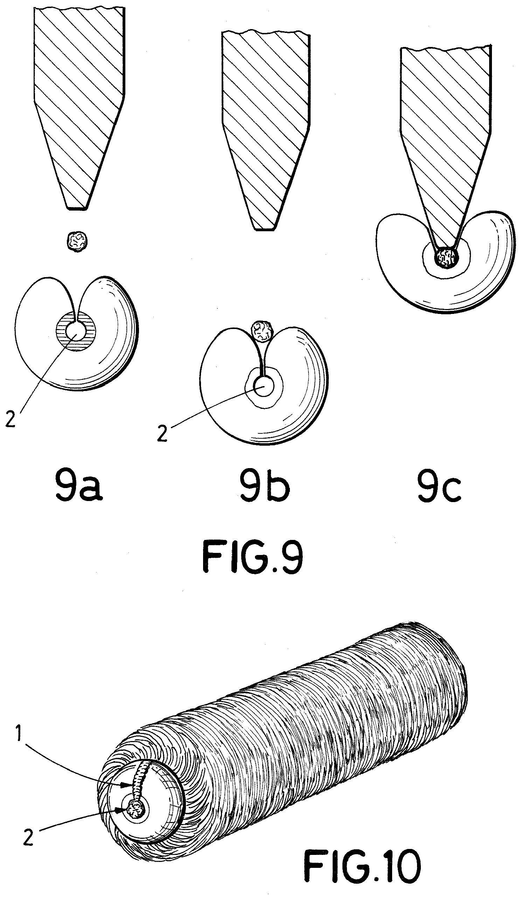

Figures 6-9 show sequential perspective view of the process of the invention.
Figure 10 shows the stick finally obtained thereof.

### PREFERRED EMBODIMENT OF THE INVENTION

### Preferred embodiment of the closure

In a preferred and simplest embodiment, the closure of the invention is made up by a short length of casing which has been twisted and clamped by a tightening element. The tightening element is a solid ring-like element, made of an edible and water soluble thermoplastic composition, which has a smoothly curved v-shaped entry gap which leads to the central hollow (see Fig. 2a) wherein a previously constricted and/or twisted portion of casing will be placed by pushing it with a wedge shaped piece.

The ring can be manufactured by means of any of the known method in the art of moulding plastics and can occur joined to a plurality of repeated elements (rings) linked to one another by a weak sewing in a strand or rod (as is shown in the Fig. 1), as the staples of a stapler, to facilitate the machinability of the feeding process of ring units, and in such a way that all the rings are open before individual use.

### The thermoplastic composition

The instant thermoplastic composition comprises a dry gelatine, an anhydrous glycerol and water. The content of water does correspond to a residual amount of water that remains after drying the commercial gelatine (whose initial content in water usually varies between 10% and 13%) and that practically is not available but only to avoid the crosslinking of gelatine. The content of water of the composition will be less than 15% and preferably between 1% and 10% and most preferably between 2% and 3%.

According with all exposed above, the most appropriate gelatine is one of food grade with a Bloom higher than 150, preferably between 200 and 300 Bloom; what provides with a higher cohesiveness to the resultant resin since the distribution of molecular weights in this grade of gelatine corresponds to bigger molecules. One example of commercial gelatine with the related features is one of Type A or B from Gelita AG, Germany (f.e. Gelita Hardgel, G. RXL, G. Advanced, G. PA etc), of 8-30 mesh, 200-300 Bloom, viscosity 25-55, with a moisture content 8,5-12.0%; another one is Juncá Gelatines (Mikel Juncá Gelatines, Banyoles, Gerona) within the same range of features and with a moisture content of 10.5%, which is used in the examples below. A reduction in the water content of the composition will be carried out further by desiccation in an oven.

### Preparation of a rod of linked rings

The composition may be homogenized through a well known process inside a single screw extruder as a Rheomex 302, or a double screw co-rotatory such as a Krupp Werner & Pfleiderer ZSK25, inside which a pressure increase occurs and of shear forces on the mixture as it travels through the interior while the temperature is increased significantly above the melting temperature of gelatinous composition. As is well known by any person skilled in the art, this process is suitable for modulating the increase of temperature, by means a controlled cooling of the extruder jacket. Inside temperature can vary between 80 and 120 ° C. During the plasticizing process the pressure inside the extruder is usually low related to the pressure in the next step of injection molding. The pressure during mass plasticizing lies generally between 20 and 75 bar, depending on the ratio polymer/polyol of the composition. The plasticized resin can be injection molded either directly or preferably in a next step, through a conventional process, into the cavity or cavities of a mold. Once the step of plasticizing has finished the mass is extruded into endless strands through a die furnished with regular round holes, those which have an individual diameter of 2 to 4 mm. Afterwards the strands are cooled and granulated in a conventional granulating machine. Granules are passed to the next operation of injection molding wherein the pressure inside the extruder increases until 70 to 120 bar and where finally, a solid body with the form of a rod or worm of linked rings is obtained, which after cooling can be ejected from the mold once this has been opened.

Needless to say that the injection molding operation can be used to manufacture not only worms of serial rings but also individual rings, although the election shall depend on how the closing machine has been designed for its best performance.

In order to change (a reduction) of the residual water content of the molded solid bodies, this process will take place inside an oven at 10⁻³mm pressure Hg vacuum at temperatures of 25 to 105 ° C. The calculation of the hydration level is performed by taking the weight of the specimens before and after the drying process, and assuming a starting water content derived from the stated specifications on raw materials.

The worm may have a length of several centimeters, and an outside diameter of between 6 and 8 mm, depending on the diameter of the bore of the shirred strand of casing. The diameter of the longitudinal bore (axial hole) of the worm ranges between 1 and 4 mm, also depending on the thickness of the cord of twisted casing to be embraced. The worm has been molded with a longitudinal groove whose section is V-shaped, that reaches the axial hole, so that any segment transversely cut from the worm has a ring shape open at "c" as shown in Figure 2. The opening (1) (gap) is the route by which the collapsed strech of twisted cord is going to be fitted in to the fastener ring-hollow.

### The ring

One tightening element or ring of the invention can be cut, rather than being unitarily manufactured, from a moulded worm-shaped preform (Fig. 1), from which a multiplicity of rings will be obtained by cross-sectional cutting. As stated above the worm-shaped preform has a segmented aspect promoted by a uniform sequence of chokes giving it a ringed appearance.

The ring, which is made up of an edible resinous thermoplastic composition based on gelatine is capable, once placed embracing the collapsed casing stretch, of displaying the following essential features:
a) to sufficiently adhere, in the melt state, to the contact surface (even in wet state), in order to ensure the fastening of the element over the casing material and so avoiding that this element to slide away the material,
b) having sufficient modulus (although not too much toughness) as for exerting sufficient radial tension of tightening against the twisted/constricted portion of casing to which it fastens, and
c) to be safe and edible as well as water soluble.

In a preferred embodiment this ring-like element is made up of a proportion of gelatine/glycerol which confers the composition a modulus higher than 10 MPa and more preferably higher than 20 MPa, what is sufficiently elevated as to allow the ring to exert a strong tightening effect onto the twisted portion of casing, while the same composition material has a sufficiently elastic behaviour as to allow the ring to be opened, without breaking, during the short fraction of time that lasts the fitting of the twisted string of casing (see Fig. 2b).

In another preferred embodiment the tightening element is a solid ring-like element, similar to that described above which is open before to be placed around a previously constricted portion of casing (see Fig. 2a), to be then closed and heat-sealed for resting firmly tight upon the casing material. All this is possible owing to the fact that, the thermoplastic composition with which the ring is made, is able to make a welding with itself by heating at a low temperature and also by having a quick weld-setting.

The opening (1) of this c-shaped ring is the pathway whereby the ring is fitted on the collapsed and/or twisted stretch of casing, that is to say the place whereby the casing stretch enters towards the ring centre. Once this stretch of casing fits on the central hollow of the ring, this one is mechanically closed. The closing operation carries with itself the heat sealing of the now joined extremes of the c-shaped ring as well as the welding of the ring over the stretch of embraced casing.

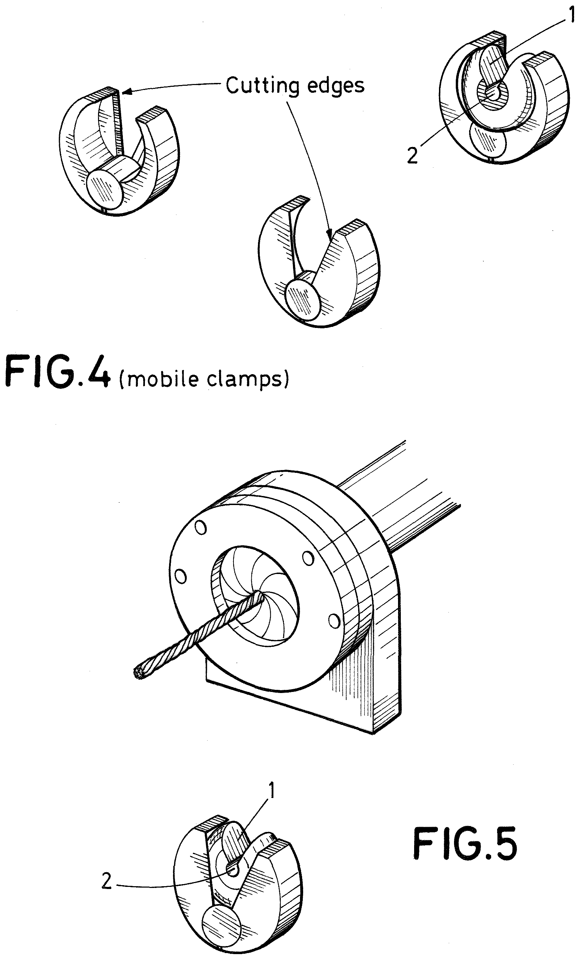

As the open ring of thermoplastic material is being closed by means of mobile clamps (Figure 4) to create the annular form, the two opposed sections of its opening are previously molten by contact with a metallic wedge shaped element that is heated at suitable temperature as to fuse at least one of the contacted surfaces; then both surfaces get close until their contact and, at this moment, it is important that the slight lowering of the initial contact temperature along with the compression exerted by the clamps which force the closing, promotes a rapid increase of the cohesiveness of this welding of material which is about to solidify, which is already strong enough to prevent the opening of the ring before total solidification (weld-setting) and avoiding that a premature loosening of the clamping occurs, once the clamps release the just formed ring.

### Proceeding of closing operation

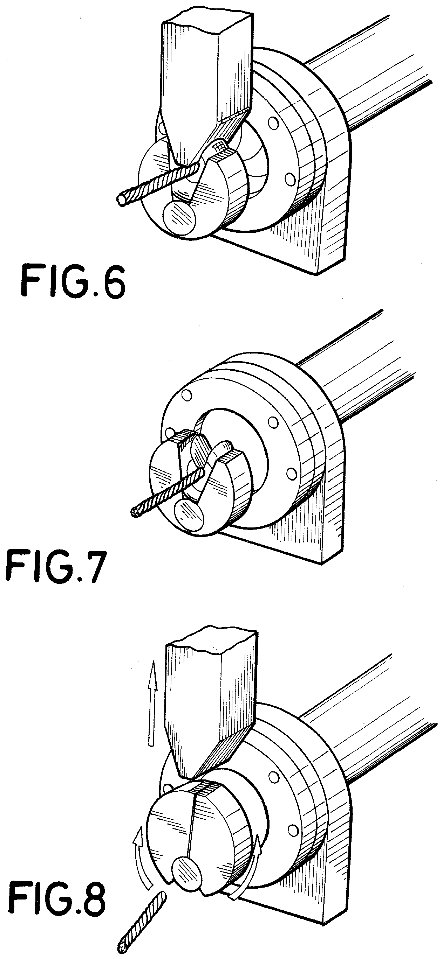

The closing operation is a cycle that takes place as follows:
a) One end of the shirred casing strand is caught by a forceps (Fig 3a, not shown) located at the end of a rod whose axis coincides with the axis of the strand. The rod retracts and pulls it for unshirring a length of not more than 5 cm of casing. Immediately a shutter (a motorized iris diaphragm) closes its blades and collapses the unshirred casing (Fig 3b) in a point between its connection with pleated part (about 10 mm of it) and the point of gripping the forceps.
b) Upon the closing of the shutter, the forceps rod rotates on its axis and twists the rest of the section of casing creating a string (string) in the direction of the axis of the strand of shirred casing (Fig 3c), of about 3 cm long.
c) The opened c-shaped locking ring is moved upwardly (Fig 4a) below the newly formed string of casing. The ring goes clamped inside the open mouth of a tongs-type device, by a type of open-tightening grip, whose function is to ring closure and simultaneous cutting the string. The ring moves up with the opening in "V" facing up to fit the string of casing inside its axial hollow. The stop of the lifting of the clip occurs just when the axes of both the ring and the string coincide.
d) While the locking ring rises, a push rod descends to push the string of casing inside the hollow of the ring (Figure 7). The end of the rod, which is of steel, has got a flattened wedge-section and straight edge on its end and is kept preheated to temperature sufficient to melt the resin ring. The rod axis coincides with both the direction and axis of the ring lifting. While the cord fits into the axial hole of the ring, the push rod does contact and melts at least by one side, but preferably by both, a layer of the opposing surfaces to be joined to seal the ring;
e) While the push rod is again removed,- the clamp which carries the ring (Figure 8) closes, causing, by one side, that the contact surfaces to fuse together and onto the twisted cord of casing and, at same time, by the other side, the cutting of the excess end thereof. The clip exerts a moderate and continuously force on the ring for a predetermined time, which can vary from 2 to 5 seconds. After this time of welding, the clamp opens and falls to its rest position, where it is loaded with the next clamping ring.
f) Immediately the shutter is opened. The ring is closed and the welding also acts on the gut section embedded therein and in a further optional step
g) The closure is pushed inward (bore) of the shirred bar of casing.

### Other versions of the Invention

It is contemplated also in the invention that after performing the closure operation the casing can be everted, or the closure introduced into the lumen of the stick, so that the ring closure lies in the internal bore of the stick (as in Figure 13 of EP-2266410, the ring should surround the point marked as 14). After stuffing, the closure of the invention can remain then in the outer surface of the sausage, or in the surface contacting the sausage. In this case, some of the closure can remain after cooking, but as the closure is edible this should cause no problem.

The ring of the invention can have other form as hexagonal, etc., not necessarily round. Also, the ring does not need to be necessarily edible (can be applied to other casings), nor soluble.

### Examples:

### Example I: Preparation of different samples of the composition.

For the embodiment of the composition there has been used a food-grade gelatin dry powder of Juncá M. (Girona, Spain) of 240 to 260 Bloom, average particle size (0.3 to 0.8 mm equivalent to 20-50 mesh, in this case particularly 35 mesh), with an apparent moisture content of 13%. To obtain compositions with increased ratios Gel / Gly between 2: 1 and 1: 2.5 are taken in each case 100 parts of commercial gelatin with a residual water content of 13% and combined with the appropriate parts of anhydrous glycerol, yielding compositions with various contents in apparent moisture as shown in the following table:
The polyol is a food-grade anhydrous glycerin from Sigma-Aldrich. The composition is made by dissolving gelatin directly in commercial glycerol by vigorous stirring and temperatures which vary between 80 and 120C. The resulting ratios expressed in Table X refer to the weight ratio of anhydrous pure products.

**Table I:**

| Sample | Gelatine (Parts) | Glycerol (Parts) | Residual Water (%) | Ratio Gly/Gel |
|---|---|---|---|---|
| A1 | 100 | 174.0 | 4.7 | 2:1 |
| A2 | 100 | 130.5 | 5.6 | 1,5:1 |
| A3 | 100 | 87.0 | 6.9 | 1:1 |
| A4 | 100 | 58.0 | 8.2 | 1: 1.5 |
| A5 | 100 | 43.5 | 9 | 1:2 |
| A6 | 100 | 34.8 | 9.6 | 1:2.5 |

### Example II: Determination of melting temperature:

From the samples made in Example I with different compositional ratios, there are determined the thermal transitions by the technique of differential scanning calorimetry (DSC). The average results are shown in the table:

**Table II:**

| Ratio Glycerol/Gelatine | Tg | Tm |
|---|---|---|
| 2:1 | -29.55 | 46.95 |
| 1:1 | -30.8 | 47.25 |
| 1:2 | 3.5 | 60.9 |

| | | |
|---|---|---|
| Tg= Glass Transition Temperature; Tm= Melting Temperature. | | |

### Example III: Determination of fluency Index.

**Table III:**

| Glycerol/Gelatine | No. of values | MVR average (cm3/10min) | Estándar deviation |
|---|---|---|---|
| Ratio 2:1 (100°C) | 8 | 723.00 | 9.31 |
| Ratio 2:1 (80°C) | 11 | 220.28 | 8.15 |
| Ratio 1:1 (80°C) | 25 | 12.51 | 0.12 |
| Ratio 1:2 (80°C) load 21,6Kg | 11 | 2.74 | 0.20 |
| Ratio 1:2 (120°C) load 5Kg | 25 | 16.69 | 0.56 |

### MVR means Melting Volume Ratio.

The dramatic drop in the flow is clearly seen (and thus increasing the viscosity and therefore the cohesiveness) owing to both the variation of the ratio of gelatine and glycerol as to the lowering of the temperature applied. This gives an idea about what is the most appropriate composition for best welding performance of the fastener ring closure of the invention at the time of its execution, i.e at a relatively low environment temperature and rapid fixation of welding.

### Example IV: Determining the elastic modulus

Tensile properties of the various samples from Example I were estimated by ASTM method D638-10 (equivalent to ISO 527-2) that specifies the test conditions for determining tensile properties of plastics molding and extrusion, based on the general principles given in ISO 527-1 using for this dog-bone shaped specimens. using dog-bone shaped specimens testing. The results are listed in Table IV.

**Table IV:**

| Ratio Glycerol/Ge latine | Average thick (mm) | Average width (mm) | Tensile strength (MPa) | Length to break (cm) | Elastic modulus (MPa) |
|---|---|---|---|---|---|
| 2:1 | 4,638 | 3,362 | 0,71 | 144 | 0,53 |
| 1:1 | 5,237 | 3,527 | 2,45 | 228 | 1,98 |
| 1:2 | 2,229 | 3,953 | 3,9 | 205 | 20,3 |
| 1:2,5 | 4,664 | 4,009 | 7,37 | 253 | 42,3 |

A dramatic increase of the elastic modulus values between the transit of ratios 1 to 2 can be observed in the table.

### Example V: Determining the adhesiveness

Adhesiveness was tested for various specimens made of all samples according to Example I. In addition to that, an amount of composition whose content of polymer / diluent (Gelatine / glycerol) corresponding to a ratio of 2:1 and whose residual water content is 9 % was dried in an oven at 60 ° C and a vacuum pressure of Hg 10⁻³mm until reaching several water contents of 6%; 3%, 1.5% and 0.5% (given rise respectively to the samples A7 to A10).

**Table V: Adhesiveness of resins of different compositions and water contents onto collagen casings with a moisture content of 12%, 21% and 35% (based on the total weight of the casing).**

| Sample | Residual Water (%) | Ratio Gly/Gel | Adhesivity (gr) on casing having humidity of 12% | Adhesivity (gr) on casing having humidity of 21% | Adhesivity (gr) on casing having humidity of 35% |
|---|---|---|---|---|---|
| A1 | 4,7 | 2:1 | 500 | 300 | 300 |
| A2 | 5,6 | 1,5:1 | 700 | 700 | 600 |
| A3 | 6,9 | 1:1 | 1000 | 1000 | 900 |
| A4 | 8,2 | 1:1,5 | Not peelable | Not peelable | Not peelable |
| A5 | 9 | 1:2 | Not peelable | Not peelable | Not peelable |
| A6 | 9,6 | 1:2,5 | Not peelable | Not peelable | Not peelable |
| A7 | 6 | 1:2 | Not peelable | Not peelable | Not peelable |
| A8 | 3 | 1:2 | Not peelable | Not peelable | Not peelable |
| A9 | 1,5 | 1:2 | Not peelable | Not peelable | Not peelable |
| A10 | 0,5 | 1:2 | Not peelable | Not peelable | Not peelable |
| A11 | 12 | 1:2 | Not peelable | Not peelable | Not peelable |
| A12 | 15 | 1:2 | Not peelable | Not peelable | 1000 |
| A13 | 18 | 1:2 | Not peelable | 1000 | 1000 |
| A14 | 20 | 1:2 | 900 | 1000 | 1000 |
| A15 | 25 | 1:2 | 900 | 900 | 1000 |

It is also noted that the compositions with very low amounts of water improve their natural adhesivity once molten, especially the higher the amount of polymer in the resin.

Not peelable means the fact when upon trying to strip one film of resin, from the surface of gut to where it was casted by melting, the resin film, once cooled and solidified is able to rip and drag the material from the gut rather than be separated from it.

### Example VI: Preparation by injection molding of several rods of sealing/fastening rings of gelatin and glycerol.

Several hollow worm-shaped rods with a longitudinal V-shaped opening, as is depicted in Fig 1 of drawings, were molded by injection molding. The starting composition of extruded resinous material was formed by Gelatine of 200 Bloom (Juncá); glycerol (food grade glycerol from Sigma-Aldrich) and a residual amount of water, and the final proportions of each component in the mixture were correspondent to the samples A4 and A8. Dimensions of these elements were, for every composition by one side of 20 cm length by 8 mm in diameter with a centred hollow of 2 mm in diameter; and by the other side of 12 mm in diameter with a central hollow of 4 mm of diameter.

The material was plasticized and extruded by a single screw extruder as it is widely applied in polymer processing industries at a temperature in a range of 87°C and 104°C, with a pressure range of about 50-100 bar. The plasticized material was extruded through a round section die with six bores of 2 mm of diameter each. The cooled-down endless strands were then granulated in a conventional granulator. Granules were used to fabricate the worm-shaped rods on a conventional injection molding machine. The mass was so injected at a pressure range of 1000-1200 bar into a stainless steel mold and the molded piece was removed from the mold. The stick was placed on a rack and was set to dry until the water content was of between of 2% and 3%. The final stick was flexible and tough.

Several short lengths (25) of 8 mm were obtained from this stick by means of cross sectional cuttings with a cutter. The cross section of each segment has an open-ring shape or c-shaped ring. The opening of this c-shaped ring is the via whereby the ring is embedded in the collapsed and/or twisted casing stretch.

### Example VII: Embodiment of the closure; test of stuffing of closed casings and cooking of the obtained sausages along with their closures.

To test the performance of the closure, there were selected two sizes of edible collagen casings; namely a caliber 21 where small rings (8 mm diameter) of compositions named A2, A4 and A8 were applied; and a caliber 28, to which the rings 12 mm from the same compositions were applied.

In every case the pleated sticks were sealed manually, as follows: one proceeded to deshirring of about two-inches of casing and then a manual shutter was used to collapse the deployed casing within an inch from the starting of the shirred stick. The remaining portion of casing, once hold by the shutter blades, was twisted to form a string with a diameter of about two millimeters for the casing of caliber 21 and about four millimeters for the one of caliber 28.

**Table VI: Results of resistance of closures to stuffing process.**

| Ring-Composition | Caliber of casing | N° of not heat-sealed closures (NTS) | N° of heat-sealed closures (TS) | N° Closures surviving after stuffing | |
|---|---|---|---|---|---|
| | | | | NTS | TS |
| R1A2 | 21 | 18 | 18 | 7 | 18 |
| R1A4 | 21 | 18 | 18 | 18 | 18 |
| R1A8 | 21 | 18 | 18 | 18 | 18 |
| R2A2 | 28 | 18 | 18 | 18 | 18 |
| R2A4 | 28 | 18 | 18 | 18 | 18 |
| R2A8 | 28 | 18 | 18 | 18 | 18 |

Immediately a ring closure of each composition was applied, by choosing sizes as indicated. Half of rings of each composition and each diameter were sealed as described in the memory, using a heat applicator of trapezoidal head of those used for tinning heated to 85 ° C. The applicator is used first to push the casing string into the central hole of the ring; once fitted, the sides of the applicator are contacted with the joint faces of the rings, what causes the immediate fusion of a surface layer; then one proceeds to remove the heat applicator, the process being simultaneous to the ring closing. Once the fused faces of the ring took mutual contact, a welding with sufficient cohesion as to being able to remove the closing pressure in less than 2 seconds was formed. After removing the pressure on the rings, they remained closed forming a tightening ring. The other half of the rings were not welded but solely were pressed after the fitting of the casing in their central hole.

The shirred and sealed sticks of casing were stuffed with sausage meat mass on a type-Robby Vemag 2 machine at a speed of 80 portions / minute, using the brake control of the filler machine.

The result of the stuffing process was as set forth in the Table VI. As reflected in said results, those rings made with the composition A2 and unsealed, can withstand relatively the stuffing process depending on the diameter thereof, so that the larger ones are more resistant to opening according to the respective calibers to which they are applied. In the case of the small rings made of the composition A2, their lesser wall thickness added to a lower elastic modulus also favors the opening of some of them during the stuffing process, so in these cases it is advisable to use a heat-sealing thereof.

Subsequently the sausages were hung on hangers for baking in a simple cycle at 90 ° C for four hours. In all cases the first sausage, namely the carrier of the ring, maintained its integrity well into the starting point of the cooking cycle. During this cycle time the meat mass was coagulated and the sausage maintained its shape until the end of the cycle. During that time the sealing rings of every first sausage are gradually dissolved to disappear before the end of the cycle. The final result was satisfactory, not only for the good closing performance but also because of the true possibility of using the sausage which carries the closure in the same way than the rest.

## Claims

1. Tubular casing for food made of an edible collagen film, having an end closure; said end closure consisting in a length of said casing whose section has been radially compressed toward its axis and/or twisted in such a way that said stretch of casing exerts the blocking of inner pathway therein; and where said stretch of compressed/twisted casing remains surrounded, fastened and tightened by a solid ring-like element which is thoroughly or partially welded to the surrounded portion of collagen casing, and wherein said ring is made up by a thermoplastic material which is **characterized by** being edible.

2. Tubular casing according to claim 1, wherein the tubular casing is shirred.

3. Tubular casing according to any of the claims 1 and 2, wherein the thermoplastic material of the ring is an edible thermoplastic composition based on proteins, polysaccharides or a mixture thereof.

4. Tubular casing according to any of claims 1 to 3, wherein the thermoplastic composition of the closing ring, in the solid state, has a Young's modulus which lies in the range of 0.5 to 50 MPa, measured at environment conditions of 23°C and 50% RH.

5. Tubular casing according to claim 4, wherein the thermoplastic composition of the closing ring has a fusion temperature (Tm) of between 40 °C and 98°C.

6. Tubular casing according to any of claims 1 to 5, wherein the thermoplastic and edible material of the closing ring is a non crosslinked and water soluble proteinic thermoplastic composition comprising a mixture of dry gelatine and a polyol, and wherein the content in weight of water is in the range of 0.5% to 15%; preferably between 1% and 5% and most preferably between 2% and 3% of the total weight of the composition.

7. Tubular casing according to claim 6, wherein the thermoplastic and edible material of the closing ring is a crosslinked and water insoluble composition.

8. Tubular casing according to claim 6 or 7, wherein said gelatine has a Bloom value higher than 150.

9. Tubular casing according to any of claims 6 to 8, wherein the polyol is glycerol.

10. Tubular casing according to any of claims 6 to 9, wherein the proteinic thermoplastic composition of the closing ring, in the solid state, has a Young modulus which lies in the range of 0.5 to 50 Mpa, measured at environment conditions of 23°C and 50% RH.

11. Tubular casing according to any of claims 6, 8, 9 and 10 wherein the proteinic thermoplastic composition of the closing ring has a fusion temperature (Tm) of between 40 °C and 98°C.

12. Tubular casing according to any of claims 1 to 5, wherein the thermoplastic and edible material of the closing ring is a polysaccharide based thermoplastic composition comprising cellulose fibres, including microfibers and nano-fibres, admixed with other selected from the group of starch, methyl cellulose, hydroxyl-methyl cellulose, hydroxyl-propyl-methyl cellulose and mixtures thereof.

13. Tubular casing according to claim 12, wherein the polysaccharide thermoplastic composition of the closing ring, in the solid state, has a Young modulus which lies in the range of 10 to 50 MPa, measured at environment conditions of 23°C and 50% RH.

14. Tubular casing according to claim 13, wherein the polysaccharide thermoplastic composition of the closing ring has a fusion temperature (Tm) of between 40 °C and 98°C.

15. Stick of a shirred tubular casing of an edible collagen film, having an end closure according to any of claims 1 to 14.

16. Method for obtaining a tubular casing with an end closure according to any of claims 1 to 14, **characterized by** the following steps:
a) providing a length of smooth or deshirred tubular casing
b) providing a stock of molded c-shaped open rings according to description and drawings; made of a thermoplastic and edible composition according claims 1 to 12,
c) clamping and twisting a short ending stretch of the length of casing from (a) to form a short strand;
d) pushing and inserting the twisted strand obtained in point (c) inside the C-shaped open ring through the entry gap of the ring, until the longitudinal axis of that strand coincides with the axis of the ring's hollow; or alternatively
e) pushing and inserting the twisted strand until being fitted inside the ring's hollow, according to the point (d) and applying a source of heating by means of the pushing element at least on one side; then retiring the pushing element and simultaneously firmly closing the c-shaped ring until the opposite sides of both tips come into contact, to weld the contact between them as well as the contact between the ring and the strand of twisted casing now entrapped therein;
f) maintaining the closing pressure on the ring during 0,5 to 5 seconds and liberate the closing pressure to release the so formed closure;
g) cutting the remaining end of the strand, and
h) inserting the ringed end closure inside the bore of the shirred strand.

17. Method according to claim 16 wherein the step (g) is simultaneously done with step (e).

18. Foodstuff comprising a tubular casing, made of an edible collagen film, having an end closure according to any of claims 1 to 14.

## Patentansprüche

1. Schlauchförmige Hülle für Lebensmittel, hergestellt aus einem essbaren Kollagenfilm, mit einem Endverschluss; wobei der Endverschluss aus einer Länge der Hülle besteht, deren Schnitt radial in Richtung ihrer Achse komprimiert und/oder verdreht worden ist, auf eine solche Weise, dass das Stück der Hülle das Blockieren des inneren Weges darin ausübt; und wobei das Stück der komprimierten/verdrehten Hülle umgeben, befestigt und festgezogen bleibt durch ein festes ringartiges Element, das vollständig oder teilweise mit dem umgebenen Teil der Kollagenhülle verschweißt ist, und wobei der Ring aus einem thermoplastischen Material zusammengesetzt ist, das **dadurch gekennzeichnet ist, dass** es essbar ist.

2. Schlauchförmige Hülle gemäß Anspruch 1, wobei die schlauchförmigen Hülle gerafft ist.

3. Schlauchförmige Hülle gemäß einem der Ansprüche 1 und 2, wobei das thermoplastische Material des Ringes eine essbare thermoplastische Zusammensetzung basierend auf Proteinen, Polysacchariden oder einer Mischung davon ist.

4. Schlauchförmige Hülle gemäß einem der Ansprüche 1 bis 3, wobei die thermoplastische Zusammensetzung des Verschlussrings, im festen Zustand, einen Elastizitätsmodul aufweist, der in dem Bereich von 0,5 bis 50 MPa, gemessen bei Umgebungsbedingungen von 23 °C und 50 % relativer Luftfeuchtigkeit, liegt.

5. Schlauchförmige Hülle gemäß Anspruch 4, wobei die thermoplastische Zusammensetzung des Verschlussrings eine Schmelztemperatur (Tm) von zwischen 40 °C und 98 °C aufweist.

6. Schlauchförmige Hülle gemäß einem der Ansprüche 1 bis 5, wobei das thermoplastische und essbare Material des Verschlussrings eine nicht vernetzte und wasserlösliche proteinhaltige thermoplastische Zusammensetzung ist, die eine Mischung aus trockener Gelatine und einem Polyol umfasst, und wobei der Gewichtsgehalt an Wasser in dem Bereich von 0,5 % bis 15 %; bevorzugt zwischen 1 % und 5 % und am stärksten bevorzugt zwischen 2 % und 3 % des Gesamtgewichts der Zusammensetzung ist.

7. Schlauchförmige Hülle gemäß Anspruch 6, wobei das thermoplastische und essbare Material des Verschlussrings eine vernetzte und wasserunlösliche Zusammensetzung ist.

8. Schlauchförmige Hülle gemäß Anspruch 6 oder 7, wobei die Gelatine einen Bloom-Wert höher als 150 aufweist.

9. Schlauchförmige Hülle gemäß einem der Ansprüche 6 bis 8, wobei das Polyol Glycerol ist.

10. Schlauchförmige Hülle gemäß einem der Ansprüche 6 bis 9, wobei die proteinhaltige thermoplastische Zusammensetzung des Verschlussrings, in dem festen Zustand, einen Elastizitätsmodul aufweist, der in dem Bereich von 0,5 bis 50 MPa, gemessen bei Umgebungsbedingungen von 23 °C und 50 % relativer Luftfeuchtigkeit, liegt.

11. Schlauchförmige Hülle gemäß einem der Ansprüche 6, 8, 9 und 10, wobei die proteinhaltige thermoplastische Zusammensetzung des Verschlussrings eine Schmelztemperatur (Tm) von zwischen 40 °C und 98 °C aufweist.

12. Schlauchförmige Hülle gemäß einem der Ansprüche 1 bis 5, wobei das thermoplastische und essbare Material des Verschlussrings eine polysaccharidbasierte thermoplastische Zusammensetzung ist, die Zellulosefasern, einschließlich Mikrofasern und Nanofasern, beigemischt mit anderem ausgewählt aus der Gruppe aus Stärke, Methylcellulose, Hydroxymethylcellulose, Hydroxypropylmethylcellulose und Mischungen davon umfasst.

13. Schlauchförmige Hülle gemäß Anspruch 12, wobei die polysaccharidbasierte thermoplastische Zusammensetzung des Verschlussrings, in dem festen Zustand, einen Elastizitätsmodul aufweist, der in dem Bereich von 10 bis 50 MPa, gemessen bei Umgebungsbedingungen von 23 °C und 50 % relativer Luftfeuchtigkeit, liegt.

14. Schlauchförmige Hülle gemäß Anspruch 13, wobei die polysaccharidbasierte thermoplastische Zusammensetzung des Verschlussrings eine Schmelztemperatur (Tm) von zwischen 40 °C und 98 °C aufweist.

15. Stück einer gerafften schlauchförmigen Hülle eines essbaren Kollagenfilms mit einem Endverschluss gemäß einem der Ansprüche 1 bis 14.

16. Verfahren zum Erhalten einer schlauchförmigen Hülle mit einem Endverschluss gemäß einem der Ansprüche 1 bis 14, **gekennzeichnet durch** die folgenden Schritte:
a) Bereitstellen einer Länge an glatter oder entraffter schlauchförmiger Hülle,
b) Bereitstellen eines Vorrats an geformten c-förmigen offenen Ringen gemäß Beschreibung und Zeichnungen; hergestellt aus einer thermoplastischen und essbaren Zusammensetzung gemäß den Ansprüchen 1 bis 12,
c) Klemmen und Verdrehen einer kurzen Endstrecke der Länge an Hülle aus (a), um einen kurzen Strang zu bilden;
d) Drücken und Einführen des verdrehten Stranges, der in Punkt (c) erhalten wurde, in das Innere des C-förmigen offenen Ringes durch den Eintrittsspalt des Ringes, bis die Längsachse des Stranges mit der Achse des Hohlraumes des Ringes zusammenfällt; oder alternativ
e) Drücken und Einführen des verdrehten Stranges, bis er in das Innere des Hohlraumes des Ringes eingepasst ist, gemäß dem Punkt (d), und Anwenden einer Wärmequelle mittels des drückenden Elements mindestens auf einer Seite; dann Zurückziehen des drückenden Elements und gleichzeitig festes Schließen des c-förmigen Ringes, bis die gegenüberliegenden Seiten beider Spitzen in Kontakt kommen, um den Kontakt zwischen ihnen sowie den Kontakt zwischen dem Ring und dem Strang der verdrehten Hülle, die nun darin gefangen ist, zu verschweißen;
f) Aufrechterhalten des Schließdrucks auf dem Ring während 0,5 bis 5 Sekunden und Freigeben des Schließdrucks, um den so gebildeten Verschluss freizugeben;
g) Schneiden des verbleibenden Endes des Stranges und
h) Einführen des beringten Endverschlusses in das Innere des Hohlraumes des gerafften Stranges.

17. Verfahren gemäß Anspruch 16, wobei der Schritt (g) gleichzeitig mit Schritt (e) ausgeführt wird.

18. Lebensmittel, das eine schlauchförmige Hülle, hergestellt aus einem essbaren Kollagenfilm mit einem Endverschluss gemäß einem der Ansprüche 1 bis 14, umfasst.

## Revendications

1. Boyau tubulaire pour aliment fait d'un film de collagène comestible, ayant une fermeture d'extrémité ; ladite fermeture d'extrémité consistant en une longueur dudit boyau dont une section a été compressée radialement vers son axe et/ou torsadée de telle manière à ce que ledit allongement de boyau exerce le blocage de la voie interne à l'intérieur ; et où ledit allongement de boyau compressé/torsadé reste entouré, attaché et serré par un élément solide de type anneau qui est totalement ou partiellement soudé à la partie entourée du boyau de collagène, et dans lequel ledit anneau est composé d'un matériau thermoplastique qui est **caractérisé en ce qu'**il est comestible.

2. Boyau tubulaire selon la revendication 1, dans lequel le boyau tubulaire est froncé.

3. Boyau tubulaire selon l'une quelconque des revendications 1 et 2, dans lequel le matériau thermoplastique de l'anneau est une composition thermoplastique comestible à base de protéines, de polysaccharides ou d'un mélange de ceux-ci.

4. Boyau tubulaire selon l'une quelconque des revendications 1 à 3, dans lequel la composition thermoplastique de l'anneau de fermeture, à l'état solide, présente un module de Young qui se trouve dans la plage allant de 0,5 à 50 MPa, mesuré dans des conditions environnementales de 23 °C et de HR de 50 %.

5. Boyau tubulaire selon la revendication 4, dans lequel la composition thermoplastique de l'anneau de fermeture présente une température de fusion (Tm) située entre 40 °C et 98 °C.

6. Boyau tubulaire selon l'une quelconque des revendications 1 à 5, dans lequel le matériau thermoplastique et comestible de l'anneau de fermeture est une composition thermoplastique protéique non réticulée et hydrosoluble comprenant un mélange de gélatine sèche et d'un polyol, et dans lequel la teneur en poids d'eau est située dans la plage allant de 0,5 % à 15 % ; de préférence entre 1 % et 5 % et de préférence encore entre 2 % et 3 % du poids total de la composition.

7. Boyau tubulaire selon la revendication 6, dans lequel le matériau thermoplastique et comestible de l'anneau de fermeture est une composition réticulée et insoluble dans l'eau.

8. Boyau tubulaire selon la revendication 6 ou 7, dans lequel ladite gélatine présente une valeur de Bloom supérieure à 150.

9. Boyau tubulaire selon l'une quelconque des revendications 6 à 8, dans lequel le polyol est le glycérol.

10. Boyau tubulaire selon l'une quelconque des revendications 6 à 9, dans lequel la composition thermoplastique protéique de l'anneau de fermeture, à l'état solide, présente un module de Young qui se trouve dans la plage allant de 0,5 à 50 MPa, mesuré dans des conditions environnementales de 23 °C et de HR de 50 %.

11. Boyau tubulaire selon l'une quelconque des revendications 6, 8, 9 et 10 dans lequel la composition thermoplastique protéique de l'anneau de fermeture présente une température de fusion (Tm) située entre 40 °C et 98 °C.

12. Boyau tubulaire selon l'une quelconque des revendications 1 à 5, dans lequel le matériau thermoplastique et comestible de l'anneau de fermeture est une composition thermoplastique à base de polysaccharide comprenant des fibres de cellulose, incluant des microfibres et des nanofibres, mélangée avec un autre sélectionné dans le groupe comprenant un amidon, une méthyl cellulose, une hydroxy-méthyl cellulose, une hydroxy-propyl-méthyl cellulose et les mélanges de ceux-ci.

13. Boyau tubulaire selon la revendication 12, dans lequel la composition thermoplastique de polysaccharide de l'anneau de fermeture, à l'état solide, présente un module de Young qui se trouve dans la plage allant de 10 à 50 MPa, mesuré dans des conditions environnementales de 23 °C et de HR de 50 %.

14. Boyau tubulaire selon la revendication 13, dans lequel la composition thermoplastique de polysaccharide de l'anneau de fermeture présente une température de fusion (Tm) située entre 40 °C et 98 °C.

15. Bâtonnet d'un boyau tubulaire froncé d'un film de collagène comestible, ayant une fermeture d'extrémité selon l'une quelconque des revendications 1 à 14.

16. Procédé pour obtenir un boyau tubulaire ayant une fermeture d'extrémité selon l'une quelconque des revendications 1 à 14, **caractérisé par** les étapes suivantes :
a) la fourniture d'une longueur d'un boyau tubulaire lisse ou déplié
b) la fourniture d'un stock d'anneaux moulés ouverts en forme de c selon la description et les dessins ; faits d'une composition thermoplastique et comestible selon les revendications 1 à 12,
c) le serrage et la torsion d'un court allongement terminal de la longueur du boyau provenant de (a) pour former un brin court ;
d) le fait de pousser et d'insérer le brin torsadé obtenu au point (c) à l'intérieur de l'anneau ouvert en forme de C à travers l'espace d'entrée de l'anneau, jusqu'à ce que l'axe longitudinal de ce brin coïncide avec l'axe du creux de l'anneau ; ou en variante
e) le fait de pousser et d'insérer le brin torsadé jusqu'à ce qu'il soit installé à l'intérieur du creux de l'anneau, selon le point (d) et l'application d'une source de chaleur au moyen de l'élément de poussée au moins sur un côté ; ensuite le retrait de l'élément de poussée et simultanément la fermeture d'une manière ferme de l'anneau en forme de c jusqu'à ce que les côtés opposés des deux pointes viennent en contact, pour souder le contact entre elles ainsi que le contact entre l'anneau et le brin du boyau torsadé désormais piégé à l'intérieur ;
f) le maintien de la pression de fermeture sur l'anneau pendant 0,5 à 5 secondes et la libération de la pression de fermeture pour libérer la fermeture ainsi formée ;
g) la découpe de l'extrémité restante du brin, et
h) l'insertion de la fermeture d'extrémité encerclée à l'intérieur du trou du brin froncé.

17. Procédé selon la revendication 16 dans lequel l'étape (g) est réalisée simultanément avec l'étape (e).

18. Produit alimentaire comprenant un boyau tubulaire, fait d'un film de collagène comestible, ayant une fermeture d'extrémité selon l'une quelconque des revendications 1 à 14.
